(19) Europäisches Patentamt
European Patent Office
Office européen des brevets

(11) Publication number: 0 032 426
B1

(12) **EUROPEAN PATENT SPECIFICATION**

(45) Date of publication of patent specification: 23.11.83

(51) Int. Cl.³: C 09 C 1/36, C 09 C 3/06

(21) Application number: 81300058.5

(22) Date of filing: 07.01.81

(54) **Process for the post-treatment of titanium dioxide.**

(30) Priority: 11.01.80 IT 1915780

(43) Date of publication of application:
22.07.81 Bulletin 81/29

(45) Publication of the grant of the patent:
23.11.83 Bulletin 83/47

(84) Designated Contracting States:
BE DE FR GB NL

(56) References cited:
FR - A - 1 552 576
GB - A - 1 330 157
US - A - 3 036 926

(73) Proprietor: Montedison S.p.A.
Patents & Licensing Dept. Foro Buonaparte, 31
P.O. Box 10528
I-20121 Milan (IT)

(72) Inventor: Scotti, Carlo
38, Via Piemonte
Voghera Pavia (IT)
Inventor: Pace, Renato Casimiro
6, Via Viora
Alessandria (IT)
Inventor: Carra', Sergio
1, Via Carlo Poma
Milan (IT)
Inventor: Santacesaria, Elio
20, Via Fratelli Rosselli
Milan (IT)

(74) Representative: Whalley, Kevin et al,
Marks & Clerk 57/60 Lincoln's Inn Fields
London WC2A 3LS (GB)

EP 0 032 426 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the post-treatment of titanium dioxide

The present invention relates to a process for the post-treatment of titanium dioxide having pigmentary morphological and granulometric characteristics, in order to confer to it a suitable coating for its use in paints, plastics materials, etc.

Usually $TiO_2$ pigment particles are coated by means of a wet treatment. For this purpose, on the $TiO_2$ particles there are precipitated, for instance, aluminium and silicon hydroxide and possibly titanium hydroxide. The mass is then dried as a result of which the hydroxides are converted to hydrated oxides. This treatment causes an improvement of different characteristics of a pigment; specifically the process actually increases the photostability of the pigment (mainly due to the effect of the aluminium oxide hydrate) and increases its chemical affinity for substances with which it comes into contact during the preparation of paints, plastics materials, etc. Moreover, it exerts a positive action on the dispersability of the pigment particles.

However, with this type of treatment, in order to achieve a good photostability, high coating percentages are necessary. As the coating is also deposited in a non-uniform way, there results an increase of the specific surface area beyond the desired levels; in fact, with a high specific surface area there occur high vehicle absorptions which consequently adversely affect the connected rheological properties.

We are aware of British Patent No. 1 330 157, which essentially describes and claims a process for the production of pigmentary titanium dioxide which comprises applying to particles of titanium dioxide in the form of a suspension in a gas stream an initial coating containing a non-hydrated oxide of aluminium, zirconium or silicon, mixing a principal halide of aluminium, zirconium or silicon with the gas stream which has a temperature below 600°C. so that reaction of the principal halide with oxygen and with $TiO_2$ is minimized, and mixing steam with the gas stream which has a temperature below 350°C. to react with the principal halide to deposit a principal coating of a hydrated oxide of aluminium, zirconium, or silicon on the surface of the particles of titanium dioxide.

We are also aware of U.S. Patent No. 3 036 926, which essentially describes and claims a method of treating finely divided titanium dioxide which comprises reacting said titanium dioxide suspended in gases with aluminium chloride vapour at a temperature high enough to cause the titanium dioxide to react with aluminium chloride vapour, said gases being inert to said reaction and thereafter immediately contacting the resulting mixture with water vapour.

One object of this invention is that of providing titanium dioxide particles with limited and controlled quantities of coating substances.

Another object of this invention is that of obtaining a coating fast adhering to the $TiO_2$ particles and which is uniform and compact.

Still another object of this invention is that of providing a coating that, when not desired, will not cause any substantial increase of the specific surface area of the $TiO_2$ particles or, on the contrary, when desired will cause a controllable increase of the specific surface area, but which will not in any case adversely affect the rheological properties of the pigment-vehicle system.

The present invention provides a process for the post-treatment of titanium dioxide particles having pigmentary morphological and granulometric characteristics, wherein the surface of the particles is activated in a moving bed by a thermal treatment with an anhydrous gas at a temperature from 400°C to 600°C, wherein the particles are then reacted in a moving bed with one or more inorganic chlorides selected from $AlCl_3$, $SiCl_4$ and $ZrCl_4$, in the presence of a carrier gas, at a temperature from 450°C to 600°C and wherein finally the particles are treated in a moving bed with a gas containing water vapour at a temperature from 200° to 400°C.

The final products of the process of the invention consist of $TiO_2$ particles coated with a layer of Al, Si and/or Zr oxides and hydrated oxides which are characterized by a high adherence of the coating to the particles. This coating, moreover, has a very uniform thickness, the elementary particles of the pigment, especially in the case of $Al_2O_3$, practically retaining their original shape. Also the specific surface area of the pigment does not undergo any considerable increase, especially in the case of $Al_2O_3$, unless it is desired to increase it within controllable limits, according to procedures that will be explained subsequently.

In the second stage there takes place a true and proper corrosion reaction of the surface of the $TiO_2$ particles by the action of the Al, Si and/or Zr chlorides, according to the following reactions, of which the ones marked [1], [3] and [5] take place at a temperature of up to about 600°C, while those marked [2], [4] and [6] take place at a temperature greater than about 600°C:

$$(x+y)TiO_2 + (2y+{}^4/_3x)AlCl_3 \rightarrow (x+y)TiCl_4 + 2yAlOCl + \tfrac{2}{3}x\ Al_2O_3 \quad [1]$$

$$3TiO_2 + 4AlCl_3 \rightarrow 3TiCl_4 + 2Al_2O_3 \quad [2]$$

$$(x+y)TiO_2 + (2y+s)SiCl_4 \rightarrow (x+y)TiCl_4 + 2ySiOCl_2 + xSiO_2 \quad [3]$$

$$TiO_2 + SiCl_4 \rightarrow TiCl_4 + SiO_2 \quad [4]$$

$$(x+y)TiO_2 + (2y+x)ZrCl_4 \rightarrow (x+y)TiCl_4 + 2yZrOCl_2 + xZrO_2 \quad [5]$$

$$TiO_2 + ZrCl_4 \rightarrow TiCl_4 + ZrO_2 \quad [6]$$

In the reactions [1], [3] and [5] the value of y tends to drop when the temperature rises, that is, the quantity of AlOCl, $SiOCl_2$ and $ZrOCl_2$ oxychlorides with respect to the corresponding oxides tends to decrease with rise of temperature.

The corrosion reaction of $TiO_2$, which, as will be explained subsequently, may attain a considerable depth, is made possible by the preceding activation stage which, amongst others, has the effect of eliminating the superficial $TiO_2$ hydroxyls, hindering their reaction with $AlCl_3$, etc., with the formation of a slight superficial passivating surface layer of $Al_2O_3$, etc. which would block any further reaction of $TiO_2$ with $AlCl_3$, etc.

The hydrolysis stage in its turn has the effect of converting all residual chlorides present on the $TiO_2$ particles into oxides and oxide-hydrates. These chlorides may be oxychlorides (present in minimum quantities at more than about 600°C), unreacted chlorides ($AlCl_3$, $ZrCl_4$, and, especially, $SiCl_4$ which has a pronounced tendency to remain adsorbed on the $TiO_2$ particles), and the chloride produced by the corrosion reaction, $TiCl_4$.

In each of the stages there is used a moving bed, that is a bed in which particles of $TiO_2$ are put into motion and placed into close contact with a gas passed through the reaction zone. Preferably, the process is effected in a fluidized bed. Pneumatic conveyors, rotary kilns, etc. can also be used.

It has been found, according to this invention, that it is not necessary to disaggregate the elementary particles of pigment by grinding before the treatment, in order to obtain a good coating on the individual particles. This is convenient in as much as the $TiO_2$ particles are often in the form of aggregate having dimensions suited for their use in a moving bed, and in particular in a fluidized bed.

Such is the case of $TiO_2$ via sulphate coming from a calcining furnace; it is quite sufficient to carry out one screening in order to eliminate the fraction greater than about 500 $\mu$.

If the available particles are too small to be used in a moving bed, they are granulated according to conventional techniques, for instance in a Heinrich type granulator.

If it is desired to reduced or increase the size of the available $TiO_2$ particles, it is preferable to adjust their size to values of 45 to 500 $\mu$, which are those most suited for treatment in fluidized beds. These values are referred to the minimum and maximum particle dimensions, and do not refer to their mean diameter which may, for instance, be from 80 to 130 $\mu$.

As already explained, the activation phase is carried out at a temperature from 400° to 600°C. Below 400°C, the activation reaction is too slow. Above 600°C, there are obtained end products of an inferior quality. Preferably, the activation is carried out at a temperature from 500° to 600°C.

The anhydrous gas used for the activation may be, for instance, either nitrogen or air.

The lower the treatment temperature and the more humid the starting product, the greater is the duration of the activation reaction. Usually there are used activation times of 15 minutes to 3 hours.

The activation must be carried out in apparatus that will allow a good contact between the anhydrous gas and the $TiO_2$ particles; for this purpose a moving bed is used, more particularly a fluidized bed.

The reaction stage with the chlorides takes place at a temperature from 450°C to 600°C.

The carrier gas of the bed of particles, into which are injected the chlorinated gas vapours, is an anhydrous gas that is inert towards $TiO_2$ as well as towards the chlorides themselves, unless it is desired to increase in a controllable way the specific surface area of the particles, as will be explained subsequently.

The inert gas may be, for instance, nitrogen or a rare gas; however, preferably nitrogen is used.

The chloride vapours may be introduced either single or in admixture with each other, depending on the nature of the coating it is desired to obtain. The chlorides may also be introduced singly, one after the other.

A degree of conversion may be defined as the ratio between the $TiO_2$ that has reacted in the corrosion reaction and the $TiO_2$ of the starting pigment. The degree of conversion thus corresponds to a measure of the corrosion intensity as well as of the quantity of coating present on the particles.

By the process of this invention, it is possible to control the degree of conversion by varying both the reaction temperature (the higher the temperature the faster is the reaction) as well as the duration of the reaction stage itself. The degree of conversion may vary from about 0.1% to 50% and more. In general there is achieved a conversion degree of 0.1% to 8%, more preferably 0.5 to 4%.

The partial pressure of the chloride in the reaction medium is in general from 0.005 to 0.15 atm.

The reaction is conducted in an apparatus suited for ensuring an intimate contact between the solid and the gaseous phases. For that purpose a moving bed is used, more particularly a fluidized bed.

The duration of the chlorination stage is determined having regard to the temperature and the degree of conversion it is desired to achieve. Suitable reaction times are, for instance, from 20 minutes to 2 hours. If it is desired to achieve very high degrees of conversion, it may however be necessary to conduct the reaction for 24 hours and even more.

In the case of the reaction with $AlCl_3$, the specific surface area of the $TiO_2$ particles remains

practically unchanged, while it slightly increases in the case of the reaction with $SiCl_4$ or $ZrCl_4$.

When it is desired to obtain a greater specific surface area of the particles, particularly for improving their dispersability, simultaneously with the reaction of $AlCl_3$, $SiCl_4$, and/or $ZrCl_4$ with the $TiO_2$ particles, there may be carried out an oxidation of the chlorides with oxygen, such reaction causing the formation of the corresponding oxides according to equations [7], [8] and [9] and their deposition on the $TiO_2$ particles:

$$4AlCl_3 + 3O_2 \rightarrow 2Al_2O_3 + 6\ Cl_2 \qquad [7]$$

$$SiCl_4 + O_2 \rightarrow SiO_2 + 2\ Cl_2 \qquad [8]$$

$$ZrCl_4 + O_2 \rightarrow ZrO_2 + 2\ Cl_2 \qquad [9]$$

Since the oxides that have formed according to the above reactions deposit onto the $TiO_2$ particles instead of being produced by reaction between the $TiO_2$ particles and the chlorides, they will form, for the part pertaining to them, a less uniform coating than the one that is obtained by the corrosion reaction alone, whereby there is obtained an increase in the specific surface area of the particles.

Upon carrying out a mixed $TiO_2$-corrosion and chloride-oxidation reaction, the coating that will be formed will thus contain oxides coming from both reactions and the increase in the specific surface area must be ascribed, in the case of $AlCl_3$, almost exclusively to the oxidation reaction, while in the case of $SiCl_4$ and $ZrCl_4$ it will be due to both reaction.

When carrying out the corrosion of $TiO_2$ and the oxidation of the chlorides simultaneously, it is preferable to use air as a carrier gas.

The quantities of coating being the same, for instance of $Al_2O_3$, the specific surface area of the coating may be increased to controllable values by increasing the quantity of $Al_2O_3$ coming from the oxidation reaction of the chlorides. All the other conditions remaining the same, the oxidation reaction of the chlorides is increased by increasing the temperature.

The obtained product at the end of the corrosion reaction or of the mixed corrosion-oxidation reaction is acid, given the presence of chlorides (oxychlorides, Al, Si and Zr chlorides, as well as $TiCl_4$). Its pH value varies, for instance, from 4.3 to 6.3.

The successive stage of the treatment with a water vapour containing gas converts the oxychlorides and chlorides to oxides and oxide hydrates, simultaneously raising the pH value.

The reaction is carried out at a temperature from 200°C to 400°C, in an apparatus suited for ensuring a close contact between the solid and the gaseous phases. For this purpose a moving bed is used, more particularly a fluidized bed.

The water vapour containing gas may, for instance, be nitrogen or air. Operating in a fluidized bed, the quantity of water vapour will be, for instance, from 2% to 10% by weight with reference to the fluidization gas.

The gas strips the hydrochloric acid, which is produced by the reaction of the chlorides with the water vapour, off the reaction medium.

The duration of this operation is in general from 15 minutes to 2 hours.

The end products coated with $Al_2O_3$ are particularly suited for those uses in which a high photostability is required. Those coated with $SiO_2$ have a good affinity for inorganic substances, which makes them suited, for instance, for use in water paints. Those coated with $ZrO_2$ have a good affinity for inorganic substances. Those coated with $Al_2O_3$ and $SiO_2$ and/or $ZrO_2$ have a high photostability and a good affinity for inorganic substances.

All these products may be subjected to a conventional final post-treatment. For instance $TiO_2$ particles coated with $Al_2O_3$, of which the specific surface area has been suitably increased by means of oxidation of the chloride, may be ground in the presence of a wetting agent, for instance a silicone. $TiO_2$ particles coated with $Al_2O_3$ without having used an oxidation treatment may be subjected to a wet post-treatment based on the precipitation of aluminium and silicon hydroxides; after drying, the coated product may be ground in the presence of a wetting agent.

The advantages of the present invention may be thus summarized:

— excellent coatings are obtained using limited and controlled quantities of coating substances;

— the coatings are particularly adherent, whereby the risk of detachment of the coating during the treatments to which the pigment is subjected is eliminated, for instance when the pigment is ground alone or in the presence of other components for the preparation of paints. Moreover the high adherence allows the optical performance of the $TiO_2$ particles to remain unaltered;

— the coating is uniform and compact and, when an oxidation reaction is not employed in the corrosion stage, causes a low increase (very low in the case of $Al_2O_3$) of the specific surface area; on the other hand it is possible to impart to the $TiO_2$ particles a controllable increase of the specific surface area. Thus, it is possible to avoid obtaining, as in the wet post-treatments, such high specific surface areas as to damage the rheological properties of the pigment-vehicle system.

The invention will be further described with reference to the following illustrative Examples.

Example 1

There was used a discontinuous fluid-bed reactor consisting of a quartz pipe having an inside diameter of 4.5 cm. The disengaging height of the bed was 50 cm.

This reactor was loaded with 60 g of a 99.9% concentration of $TiO_2$ of rutile cystalline structure, and with an elementary granulometry characterized by a mean geometrical diameter $d_g$ equal to 0.185 micron, by a standard geometrical deviation $\delta_g$ of 1.37, and by a specific surface area of 5.5 sq.mt/g.

This $TiO_2$ was obtained by a process passing through sulphate and was drawn off at the outlet of a calcining furnace. The product was in the form of aggregates with a mean diameter of 110 microns.

The activation stage of the process according to the invention was conducted maintaining the reactor at 600°C and by subjecting the titanium dioxide to a 50 Nl/hour flow of nitrogen for 120 minutes.

The corrosion reaction of the process according to the invention was conducted at 500°C with a 100 Nl/hour flow of a gaseous mixture consisting of $N_2$ and $AlCl_3$, in which mixture the partial pressure of the $AlCl_3$ was $1.46.10^{-2}$ atmospheres, which corresponded to $5.97.10^{-7}$ mols/cc. The corrosion treatment lasted 127 minutes and yielded a deposit of aluminium compounds which, calculated as $Al_2O_3$, corresponded to 1.4% on the total weight of the particles (i.e. on the weight of the $TiO_2$ and of its coating).

The quantity of Cl and Al in the coating was determined by fluorescence X-ray examination. The atomic ratio Cl/Al was 0.41. The product had a pH value of 4.4, and a specific surface area of 5.6 sq.mt/g.

The photostability of the product was measured in a Resial 1180 based enamel baked at 135°C. Resial 1180, produced by MONTEDISON SpA, is an alkydic resin. The pigment specimen in the enamel was subjected, in an accelerated exposure test, to the ultraviolet radiation of a carbon arc lamp, produced by a Fade-Ometer of the Atlas Electric Devices Company. The duration of the exposure was 17 hours. On the basis of the reflectance loss with the blue filter after exposure, there was calculated a photoinstability index $F_i$ which is so much the lower, the more photostable the product. The photoinstability index $F_i$ of the product coming from the corrosion stage was lower than or equal to 0.1, while that of the starting $TiO_2$ was 1.65. Resial is a Registered Trade Mark.

A hydrolysis stage was then carried out at a temperature of 300°C with a gaseous mixture of nitrogen and water vapour containing 4% by weight of $H_2O$, at a flow rate of 100 Nl/hour. The duration of the hydrolysis stage was 60 minutes. The end product was free of chlorine and had a pH value of 6.1, and a specific surface area of 6.2 sq.mt/g. Its $F_i$ index was lower than or equal to 0.1.

Example 2

An activation stage was effected as described in the foregoing example 1. Thereupon, there was carried out a corrosion stage with $AlCl_3$ with a simultaneous oxidation at 600°C, by means of a 100 Nl/hour flow of a gaseous mixture of air and $AlCl_3$, wherein the partial pressure of the $AlCl_3$, was $1.46.10^{-2}$ atm. The treatment time was 185 minutes.

At the end of the corrosion-oxidation stage, there was obtained a coating of aluminium compounds equivalent to 5.3% by weight of $Al_2O_3$ on the total weight of the particles. 60% of the coating was due to the corrosion. The product coming from the corrosion stage had a pH value of 4.3, an $F_i$ index of 0.10, and a specific surface area of 7.8 sq.mt/g.

Thereupon a hydrolysis stage was carried out following the same procedure as described in example 1. The end product had a pH value of 6.2, an $F_i$ index of 0.10, and a specific surface area 8.1 sq.mt/g.

Example 3

An activation stage was effected as described in the foregoing example 1. Thereupon, there was carried out a corrosion stage in nitrogen with $AlCl_3$, the reaction being conducted at 500°C with a flow of a gaseous mixture of $N_2$ and $AlCl_3$ at a flow rate of 100 Nl/hour, wherein the partial pressure of the $AlCl_3$ was $1.46.10^{-2}$ atm. The duration of the reaction was 120 minutes.

At the end of the corrosion stage, the product had an $F_i$ indes of 0.22, and a specific surface area of 5.4 sq.mt/g.

Thereupon, there was carried out a hydrolysis stage following the same procedure as described in example 1, except that the temperature was 400°C.

The coating of the end product contained 1.49% by weight of $Al_2O_3$ on the total weight of the particles, and had a pH value of 5.6, an $F_i$ index of 0.22, and a specific surface area of 6.2 sq.mt/g.

Example 4

An activation stage was effected as described in the foregoing example 1. Thereupon, there was carried out a corrosion stage with $AlCl_3$ and a simultaneous oxidation at 500°C, by means of a 100 Nl/hour flow of a gaseous mixture of air and $AlCl_3$, wherein the partial pressure of the $AlCl_3$ was $1.46.10^{-2}$ atm. The duration of the treatment was 180 minutes.

At the end of the corrosion-oxidation stage, there was obtained a coating of aluminium compounds equivalent to 1.5% by weight of $Al_2O_3$ on the total weight of the particles. The atomic ratio Cl/Al was equal to 0.23. The product had a specific surface area of 6.4 sq.mt/g, a pH value of 4.7, and a $F_i$ index of lower than or equal to 0.1.

Thereupon, there was carried out a hydrolysis stage by following the same procedure as described in example 1. The end product had a pH value of 6.2, a specific surface area of 7.4 sq.mt/g, and $F_i$ index of lower than or equal to 0.1.

Example 5

This example illustrates how to obtain a very high degree of conversion.

First there was carried out an activation stage as described in the foregoing example 1. Thereupon, there was carried out a corrosion stage with $AlCl_3$ in nitrogen, the reaction being conducted at 600°C by means of a 100 Nl/hour flow of a gaseous mixture of $N_2$ and $AlCl_3$, wherein the partial pressure of the $AlCl_3$ was $1.46.10^{-2}$ atm. The duration of the reaction was 24 hours. At the end of the corrosion stage, there was obtained a coating of aluminium compounds equivalent to 28.86% by weight of $Al_2O_3$ on the total weight of the particles. The product, coming from the corrosion stage, had a pH value of 4.3, and a specific surface area 5.6 sq.mt/g.

Example 6

An activation stage was effected as described in the foregoing example 1. Thereupon, there was carried out a corrosion reaction with $AlCl_3$ in nitrogen, the reaction being conducted at 700°C for 30 minutes with a 100 nl/hour flow of a gaseous mixture of $N_2$ and $AlCl_3$, wherein the partial pressure of the $AlCl_3$ was $1.46.10^{-2}$ atm.

At the end of the corrosion stage, there was obtained a coating of $Al_2O_3$ equivalent to 3.1% by weight on the total weight of the particles. The products coming from the corrosion stage had a pH value of 4.8, an $F_i$ index lower than or equal to 0.1, and a specific surface area of 5.0 sq.mt/g.

Example 7

An activation stage was effected as described in the foregoing example 1. Thereupon, there was carried out a corrosion stage with $SiCl_4$ and a simultaneous oxidation at 600°C by means of a 100 Nl/hour flow of a gaseous mixture of air and $SiCl_4$, wherein the partial pressure of the $SiCl_4$ $1.4.10^{-2}$ atm. The duration of the treatment was 180 minutes.

At the end of the corrosion-oxidation stage there was obtained a coating of silicon compounds equivalent to 2.1% by weight of $SiO_2$ on the total weight of the particles. The product coming from the corrosion stage had a pH value of 6.3 and a specific surface area of 9.0 sq.mt/g.

Thereupon, there was carried out a hydrolysis stage by following the same procedure as described in example 1. The pH value of the end product was 6.9, and the specific surface area was 9.8 sq.mt/g.

Example 8

An activation stage was effected as described in the foregoing example 1. Thereupon, there was carried out a corrosion stage with $ZrCl_4$ in nitrogen, the reaction being conducted at 600°C by means of a 100 Nl/hour flow of a gaseous mixture of nitrogen and $ZrCl_4$, wherein the partial pressure of the $ZrCl_4$ of 40 mmHg was $5.3.10^{-2}$ atm. The duration of the treatment was 75 minutes.

At the end of the corrosion stage there was obtained a coating of zirconium compounds equivalent to 2.6% of $ZrO_2$ on the total weight of the particles. The atomic ratio Cl/Zr was 0.10. The product coming from the corrosion stage had a pH value of 5.3, an $F_i$ index of 0.7, and a specific surface area of 8.4 sq.mt/g. Thereupon, there was carried out a hydrolysis stage by following the same procedure as described in example 1, thereby obtaining a product with a pH value of 6.2 and a specific surface area of 8.7 sq.mt/g.

Example 9

An activation stage was effected as described in the foregoing example 1. Thereupon, there was carried out a corrosion reaction with $SiCl_4$ at 500°C, by means of a 100 Nl/hour flow of a gaseous mixture of nitrogen and $SiCl_4$, wherein the partial pressure of the $SiCl_4$ was $1.4.10^{-2}$ atm. The treatment time was 180 minutes.

At the end of the corrosion stage there was obtained a coating of silicon compounds equivalent to 1.1% by weight of $SiO_2$ on the total weight of the particles. The atomic ratio Cl/Si was 0.45.The product had a pH value of 5.85, and a specific surface area of 8.4 sq.mt/g.

Thereupon, there was carried out a hydrolysis by following the same procedure as described in example 1. The pH value of the end product was 6.8, and the specific surface area was 8.9 sq.mt/g.

Example 10

Using the same reactor as that used in example 1, there was carried out an activation stage at 450°C, subjecting titanium dioxide to a 50 Nl/hour flow of nitrogen for 120 minutes.

Thereupon, there was carried out a corrosion stage at 450°C with $SiCl_4$, by means of a

100 Nl/hour flow of a gaseous mixture of nitrogen and $SiCl_4$, wherein the partial pressure of the $SiCl_4$ was $1.4.10^{-2}$ atm. The treatment time was 180 minutes.

At the end of the corrosion stage there was obtained a coating of silicon compounds equivalent to 1.3% by weight of $SiO_2$ on the total weight of the particles. The product had an atomic ratio Cl/Si of 0.7, a pH value of 2.5, and a specific surface area of 8.7 sq.mt/g. Thereupon, there was carried out a hydrolysis stage by following the procedure described in Example 1. The pH value of the end product was 5.5, and the specific surface area was 9.4 sq.mt/g.

Attention is drawn to out copending European Patent Application No. 81300057.7, which, in one aspect, describes and claims titanium dioxide particles having pigmentary morphological and granulometric characteristics, characterized in that the particles have a chemically reactive coating comprising a mixture of oxide and oxychloride selected from $Al_2O_3$ and AlOCl, $SiO_2$ and $SiOCl_2$, and $ZrO_2$ and $ZrOCl_2$.

This application No. 81300057.7, in another aspect, describes and claims a process for the preparation of titanium dioxide particles having pigmentary morphological and granulometric characteristics, characterized in that, to form on the particles a chemically reactive coating according to the preceding paragraph, the surface of the particles is activated in a moving bed by means of a thermal treatment with an anhydrous gas, at a temperature 400°C to 600°C, and in that the particles are then reacted in a moving bed with an inorganic chloride selected from $AlCl_3$, $SiCl_4$ and $ZrCl_4$ in the presence of a carrier gas, at a temperature from 350°C to 600°C.

## Claims

1. A process for the post-treatment of titanium dioxide particles having pigmentary morphological and granulometric characteristics, characterized in that the surface of the particles is activated in a moving bed by a thermal treatment with an anhydrous gas at a temperature from 400°C to 600°C, in that the particles are then reacted in a moving bed with one or more inorganic chlorides selected from $AlCl_3$, $SiCl_4$ and $ZrCl_4$, in the presence of a carrier gas, at a temperature from 450°C to 600°C, and in that finally the said particles are treated in a moving bed with a gas containing water vapour at a temperature from 200° to 400°C.

2. A process as claimed in claim 1, characterized in that the said thermal activation treatment is carried out at a temperature from 500°C to 600°C.

3. A process as claimed in claim 1 or 2, characterized in that, in the said reaction of the particles with the inorganic chloride or chorides, as a carrier gas there is used either nitrogen or a rare gas.

4. A process as claimed in claim 1 or 2, characterized in that, simultaneously with the said reaction of the particles with the inorganic chloride or chlorides, the chloride(s) is also made to react with oxygen, to thus form the corresponding oxide(s) which deposits on the surface of the particles.

5. A process as claimed in claim 4, characterized in that, in the said reaction of the particles with the inorganic chloride(s) and the said reaction of the chloride(s) with oxygen, as a carrier gas there is used air.

6. A pigment, characterized by being post-treated by means of the process claimed in any preceding claim.

## Revendications

1. Procédé de post-traitement de particules de dioxyde de titane présentant des caractéristiques morphologiques et granulométriques pigmentaires, caractérisé en ce que l'on active la surface des particules en lit mobile par un traitement thermique au moyen d'un gaz anhydre, à une température de 400 à 600°C, en ce que l'on fait réagir les particules, en lit mobile, avec un ou plusieurs chlorures minéraux choisis parmi $AlCl_3$, $SiCl_4$ et $ZrCl_4$, en présence d'un gaz porteur, à une température de 450 à 600°C, et en ce que, enfin on traite lesdites particules, en lit mobile, par un gaz renfermant de la vapeur d'eau, à une température de 200 à 400°C.

2. Procédé selon la revendication 1, caractérisé en ce que l'on effectue ledit traitement d'activation thermique à une température de 500 à 600°C.

3. Procédé selon la revendication 1 ou 2, caractérisé en ce que, dans ladite réaction des particules avec le ou les chlorures minéraux, on utilise l'azote ou un gaz rare en tant que gaz porteur.

4. Procédé selon la revendication 1 ou 2, caractérisé en ce que, en même temps que ladite réaction des particules avec le ou les chlorures minéraux, on fait aussi réagir le ou les chlorures avec l'oxygène pour former ainsi le ou les oxydes correspondants qui se déposent à la surface des particules.

5. Procédé selon la revendication 4, caractérisé en ce que, dans ladite réaction des particules avec le ou les chlorures minéraux et dans ladite réaction du ou des chlorures avec l'oxygène, on utilise l'air en tant que gaz porteur.

6. A titre de produit industriel nouveau, un pigment caractérisé en ce qu'il a reçu un post-traitement selon une quelconque des revendications 1 à 5.

**Patentansprüche**

1. Verfahren zur Nachbehandlung von Titandioxidteilchen mit pigmentartigen morphologischen und granulometrischen Charakteristiken, dadurch gekennzeichnet, daß die Oberfläche der Teilchen in einem Fließbett durch thermische Behandlung mit einem wasserfreien Gas bei einer Temperatur von 400°C—600°C aktiviert wird, daß die Teilchen dann in einem Fließbett mit einem oder mehreren anorganischen Chloriden, ausgewählt unter $AlCl_3$, $SiCl_4$ und $ZrCl_4$, in Gegenwart eines Trägergases bei einer Temperatur von 450°C—600°C umgesetzt werden und daß schließlich die Teilchen in einem Fließbett mit einem Wasserdampf enthaltenden Gas bei einer Temperatur von 200°C—400°C behandelt werden.

2. Verfahren nach Anspruch 1, dadurch gekennzeichnet, daß die thermische Aktivierungsbehandlung bei einer Temperatur von 500°C—600°C durchgeführt wird.

3. Verfahren nach Anspruch 1 oder 2, dadurch gekennzeichnet, daß bei der Umsetzung der Teilchen mit dem bzw. den anorganischen Chloriden als Trägergas entweder Stickstoff oder ein Edelgas verwendet wird.

4. Verfahren nach Anspruch 1 oder 2, dadurch gekennzeichnet, daß gleichzeitig mit der Umsetzung der Teilchen mit dem bzw. den anorganischen Chloriden das bzw. die Chloride auch mit Sauerstoff umgesetzt werden, um das bzw. die entsprechenden Oxide zu bilden, die sich auf der Oberfläche der Teilchen abscheiden.

5. Verfahren nach Anspruch 4, dadurch gekennzeichnet, daß bei der Umsetzung der Teilchen mit dem bzw. den anorganischen Chloriden und der Umsetzung des bzw. der Chloride mit Sauerstoff Luft als Trägergas verwendet wird.

6. Pigment, dadurch gekennzeichnet, daß es mittels des Verfahrens nach irgendeinem der vorangehenden Ansprüche nachbehandelt worden ist.